# EUROPÄISCHE PATENTSCHRIFT

(11) **EP 3 172 097 B1**
(45) Veröffentlichungstag und Bekanntmachung des Hinweises auf die Patenterteilung: **19.12.2018**
(21) Anmeldenummer: 15739218.4
(22) Anmeldetag: 10.07.2015
(51) Int. Cl.: B60S 1/34, B60S 1/38

(54) **SCHNELLVERBINDUNGSEINRICHTUNG FÜR FINRAY-WISCHER**
QUICK CONNECTING DEVICE FOR FIN RAY WIPER
MOYEN DE CONNEXION RAPIDE POUR ESSUIE-GLACE FINRAY

(30) Priorität: 24.07.2014 DE 102014214571
(43) Veröffentlichungstag der Anmeldung: 31.05.2017
(73) Patentinhaber: Robert Bosch GmbH, 70442 Stuttgart (DE)
(72) Erfinder: VAN EYNDHOVEN, Adriaan, 70180 Stuttgart (DE); HACKL, Viktor, H-9400 Sopron (HU); DEAK, Peter, H-1188 Budapest (HU); WEILER, Michael, 77815 Buehl (DE)
(86) Internationale Anmeldenummer: PCT/EP2015/065817
(87) Internationale Veröffentlichungsnummer: WO 2016/012272

(56) Entgegenhaltungen:
- WO-A1-2015/071085
- DE-A1-102005 060 865
- DE-A1-102012 201 287
- DE-A1-102013 214 064
- DE-B- 1 045 826
- FR-A7- 2 109 782

## Beschreibung

Die Erfindung betrifft eine Scheibenwischvorrichtung für ein Fahrzeug, insbesondere ein Kraftfahrzeug.

### Stand der Technik

Scheibenwischvorrichtungen haben typischerweise einen Wischarm oder Wischhebel, wobei ein Wischblatt auf der Scheibe eines Kraftfahrzeugs bewegt wird. Dabei wird das Wischblatt zwischen einer ersten Wendelage und einer zweiten Wendelage bewegt. Zu diesem Zweck ist der Wischarm über die Antriebswelle mit einem Wischermotor verbunden. Insbesondere auf Windschutzscheiben mit starken Krümmungsänderungen verliert das Wischblatt leicht den Kontakt zur Scheibe. Hierdurch kann es, insbesondere bei stark gekrümmten Scheiben zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es eine Bedürfnis, Scheibenwischvorrichtungen weiter zu verbessern.

Bei der Verbesserung gibt es eine Mehrzahl von Randbedingungen, die zusätzlich berücksichtigt werden sollten. Dabei ist es auch ein Bedürfnis, die Handhabung bzw. die Benutzerfreundlichkeit, beispielsweise bei der Montage oder der Demontage des Wischarms, zu gewährleisten bzw. zu verbessern.

Aus der DE 10 2013 214 064 ist ein Wischerarm mit einem Wischblatt bekannt, dass ein langgestrecktes Oberteil, ein langgestrecktes Unterteil und mehrere Verbindungselemente zum Verbinden des Oberteils und des Unterteils aufweist, wobei die Verbindungselemente entlang einer Längserstreckung des Wischblatts voneinander beabstandet sind.

Weiterhin ist aus der DE 10 2012 201 287 eine Schnellverbindungseinrichtung für einen Wischerarm bekannt.

### Offenbarung der Erfindung

Es ist die Aufgabe der vorliegenden Erfindung, ein zuverlässiges, weitgehend schlierenfreies Wischen einer Scheibe eines Fahrzeugs zu gewährleisten, wobei ein Anpressdruck des Wischblatts auf die Scheibe möglichst konstant gehalten wird und der Wischarm der Scheibenwischvorrichtung auf einfache Weise montierbar bzw. demontierbar ist.

Diese Aufgabe wird gelöst durch eine Scheibenwischvorrichtung mit den Merkmalen gemäß Anspruch 1.

Gemäß einer Ausführungsform der vorliegenden Erfindung wird eine Scheibenwischvorrichtung für ein Fahrzeug, insbesondere ein Kraftfahrzeug, vorgeschlagen. Die Scheibenwischvorrichtung umfasst einen Wischarm mit einem Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet und an dem Oberteil und/oder dem Unterteil mittels eines Drehgelenks angebracht sind. Die Verbindungselemente sind ausgelegt, um eine Bewegung des Oberteils und des Unterteils relativ zueinander mit einer Bewegungskomponente entlang einer Längserstreckung des Wischblatts zu ermöglichen.

Die Scheibenwischvorrichtung weist eine Schnellverbindungseinrichtung auf, welche dafür ausgelegt ist, den Wischarm der Scheibenwischvorrichtung lösbar mit einer Antriebswelle einer Scheibenwischer-Antriebseinheit (Wischermotor) des Fahrzeugs zu verbinden. Die Schnellverbindungseinrichtung weist ein Eingriffsteil, welches dafür ausgelegt ist, in die Antriebswelle und/oder in ein an der Antriebswelle angebrachtes Drehmomentübertragungsteil einzugreifen, um ein Drehmoment von der Antriebswelle über die Schnellverbindungseinrichtung auf den Wischarm zu übertragen, und eine elastische Klemmbacke auf, welche dafür ausgelegt ist, das Eingriffsteil bei einem Anlegen einer externen Kraft von einer Klemmposition, in der die Schnellverbindungseinrichtung den Wischarm an die Antriebswelle klemmt, in eine Freigabeposition, in der der Wischarm der Scheibenwischvorrichtung von der Antriebswelle entfernbar ist, zu überführen.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Gemäß den hier beschriebenen Ausführungsformen der Erfindung können Scheibenwischvorrichtung für Fahrzeuge auf besonders günstige Weise und für eine Mehrzahl unterschiedlicher Einsatzgebiete hergestellt werden. Weiterhin ermöglichen es die Ausführungsformen der Erfindung, ein zuverlässiges, weitgehend schlierenfreies Wischen einer Scheibe eines Fahrzeugs, wobei ein Wischarm der Scheibenwischvorrichtung auf einfache Weise und in kurzer Zeit montiert bzw. demontiert werden kann.

Gemäß einer Ausführungsform der vorliegenden Erfindung wird eine Scheibenwischvorrichtung für ein Fahrzeug, insbesondere ein Kraftfahrzeug, vorgeschlagen. Die Scheibenwischvorrichtung umfasst einen Wischarm mit einem Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet und an dem Oberteil und/oder dem Unterteil mittels eines Drehgelenks angebracht sind. Die Verbindungselemente sind ausgelegt, um eine Bewegung des Oberteils und des Unterteils relativ zueinander mit einer Bewegungskomponente entlang einer Längserstreckung des Wischblatts zu ermöglichen. Die Scheibenwischvorrichtung weist eine Schnellverbindungseinrichtung auf, welche dafür ausgelegt ist, den Wischarm der Scheibenwischvorrichtung lösbar mit einer Antriebswelle einer Antriebseinheit des Fahrzeugs zu verbinden. Die Schnellverbindungseinrichtung weist ein Eingriffsteil, welches dafür ausgelegt ist, in die Antriebswelle und/oder in ein an der Antriebswelle angebrachtes Drehmomentübertragungsteil einzugreifen, um ein Drehmoment von der Antriebswelle über die Schnellverbindungseinrichtung auf den Wischarm zu übertragen, und eine elastische Klemmbacke auf, welche dafür ausgelegt ist, das Eingriffsteil bei einem Anlegen einer externen Kraft von einer Klemmposition, in der die Schnellverbindungseinrichtung den Wischarm an die Antriebswelle klemmt, in eine Freigabeposition, in der der Wischarm der Scheibenwischvorrichtung von der Antriebswelle entfernbar ist, zu überführen.

Gemäß noch weiteren Ausführungsformen weist die Schnellverbindungseinrichtung ein Befestigungsteil auf, welches dafür ausgelegt ist, das Oberteil und das Unterteil des Wischblatts mit der Schnellverbindungseinrichtung zu verbinden. Auf diese Weise wird eine einfache Handhabung des gesamten Wischarms mit Wischblatt und Wischblattkopf bei einem Abnehmen bzw. bei einem Installieren des Wischarms sichergestellt.

Gemäß noch weiteren Ausführungsformen kann die Schnellverbindungseinrichtung ein Material enthaltend, welches gewählt ist aus der Gruppe, die besteht aus Gummi, Carbon, POM, PA, TPE, insbesondere TPE-S, TPE-O, TPE-U, TPE-A TPE-V und TPE-E, oder jedweder Kombination davon.

Auf diese Weise wird der Vorteil erzielt, dass durch eine geeignete Materialauswahl physikalische, und insbesondere mechanische Eigenschaften der Scheibenwischvorrichtung integral mit der Schnellverbindungseinrichtung eingestellt werden können. Ferner ist es möglich, die Schnellverbindungseinrichtung zusammen mit dem Wischarm als ein integrales Bauteil in Spritzguss auszuführen, wodurch fertigungstechnische Vorteile erzielt werden, die eine kostengünstige Herstellung des Wischarms in Einheit mit der Schnellverbindungseinrichtung zulassen. Ferner kann der Vorteil erzielt werden, dass die elastische Klemmbacke integral mit dem Wischblattkopf der Scheibenwischvorrichtung ausgebildet werden kann.

Gemäß noch weiteren Ausführungsformen kann die elastische Klemmbacke in der Klemmposition, in der die Schnellverbindungseinrichtung den Wischarm an die Antriebswelle klemmt, die Antriebswelle und das Drehmomentübertragungsteil umschließen. Auf diese Weise werden der Klemmmechanismus und die Antriebswelle mit dem Drehmomentübertragungsteil gegen Verschmutzung und/oder Beschädigung geschützt.

Gemäß noch weiteren Ausführungsformen kann die elastische Klemmbacke aus einem Kunststoffmaterial ausgeführt werden. Hierdurch wird eine kostengünstige Fertigung der Schnellverbindungseinrichtung ermöglicht. Nach der Erfindung ist die Klemmbacke in einer Einheit mit dem Wischblattkopf als ein integrales Bauteil in Spritzguss ausgeführt, wodurch fertigungstechnische Vorteile erzielt werden.

Gemäß noch weiteren Ausführungsformen kann die Klemmbacke derart ausgelegt werden, dass eine externe Kraft in einer Krafteinwirkungsrichtung, welche ungefähr senkrecht zu einer Antriebsachse der Antriebswelle ausgerichtet ist, elastisch nachgiebig aufgenommen wird. Auf diese Weise wir es möglich, die Klemmbacke durch ein seitliche Drücken senkrecht zu der Antriebsachse der Antriebseinheit zu betätigen.

Gemäß noch weiteren Ausführungsformen kann die Schnellverbindungseinrichtung einen ovalen Freigabemechanismus aufweisen, bei dem eine Auslöserichtung, in welche das Eingriffsteil zur Erreichung die Freigabeposition bewegt wird, ungefähr senkrecht zu der Krafteinwirkungsrichtung ausgerichtet ist.

Gemäß noch weiteren Ausführungsformen kann die Schnellverbindungseinrichtung einen Freigabemechanismus nach Art einer Wippe aufweisen, bei dem eine Auslöserichtung, in welche das Eingriffsteil zur Erreichung der Freigabeposition bewegt wird, ungefähr antiparallel zu der Krafteinwirkungsrichtung ausgerichtet ist. Hierbei kann es vorteilhaft sein, wenn ein Abstand zwischen einer Achse, in welcher die externe Kraft in der Krafteinwirkungsrichtung auf die Klemmbacke einwirkt, und einer Achse der Auslöserichtung des Eingriffsteils in einem Bereich von 0,5 cm und 7 cm, insbesondere in einem Bereich von 1 cm bis 4 cm, und ferner insbesondere bei ungefähr 2,5 cm liegt.

Gemäß einer weiteren bevorzugten Ausführungsform können die mehreren Verbindungselemente an mehreren oberen Verbindungspositionen mit dem Oberteil und an mehreren unteren korrespondierenden Verbindungspositionen mit dem Unterteil verbunden sein, wobei bei der Bewegung des Oberteils und des Unterteils relativ zueinander der Abstand zwischen einer oberen Verbindungspositionen und einer korrespondierenden unteren Verbindungsposition, im Wesentlichen konstant ist, insbesondere konstant ist mit einer Abweichung von ±1 mm. Hierdurch kann eine Kraftübertragung zwischen dem Oberteil und dem Unterteil zur Verfügung gestellt werden, die eine Scheibenwischvorrichtung ermöglicht, die gemäß dem Finray-Prinzip arbeitet.

### Kurze Beschreibung der Zeichnungen

Ausführungsbeispiele der Erfindung sind in den Figuren dargestellt und werden im Folgenden näher beschrieben. Es zeigen:
Figur 1 eine perspektivische Darstellung eines Wischblattkopfs, welcher von einer Antriebswelle einer Scheibenwischer-Antriebseinheit des Fahrzeugs abhebbar ist, mit einer Schnellverbindungseinrichtung, gemäß Ausführungsformen der Erfindung,
Figur 2 eine schematische Darstellung zur Erläuterung des Funktionsprinzips der Schnellverbindungseinrichtung vom Wippen-Typ, gemäß Ausführungsformen der Erfindung,
Figur 3 eine perspektivische Darstellung der in Figur 2 skizzierten Schnellverbindungseinrichtung vom Wippen-Typ im Detail, gemäß Ausführungsformen der Erfindung,
Figur 4 eine perspektivische Darstellung einer weiteren Schnellverbindungseinrichtung vom ovalen Typ, sowie eine schematische Darstellung zur Erläuterung des Funktionsprinzips der weiteren Schnellverbindungseinrichtung, gemäß Ausführungsformen der Erfindung,
Figur 5A eine schematische Darstellung eines weiteren Ausführungsbeispiels einer erfindungsgemäßen Scheibenwischvorrichtung in Form eines Wischerarms mit integriertem Wischblatt in einer Grundstellung,
Figur 5B eine schematische Darstellung des Wischerarms mit integriertem Wischblatt nach Figur 5A in einer an eine Scheibe angelegten Stellung,
Figur 6 eine schematische Darstellung eines Wischblatts gemäß Ausführungsformen vorliegenden Erfindung in einer Grundstellung, und
Figur 7 eine schematische Darstellung eines Wischblatts gemäß Ausführungsformen der vorliegenden Erfindung in einer an eine Scheibe angelegten Stellung.

### Ausführungsformen der Erfindung

Im Folgenden werden, sofern nicht anders vermerkt, für gleiche und gleichwirkende Elemente gleiche Bezugszeichen verwendet.

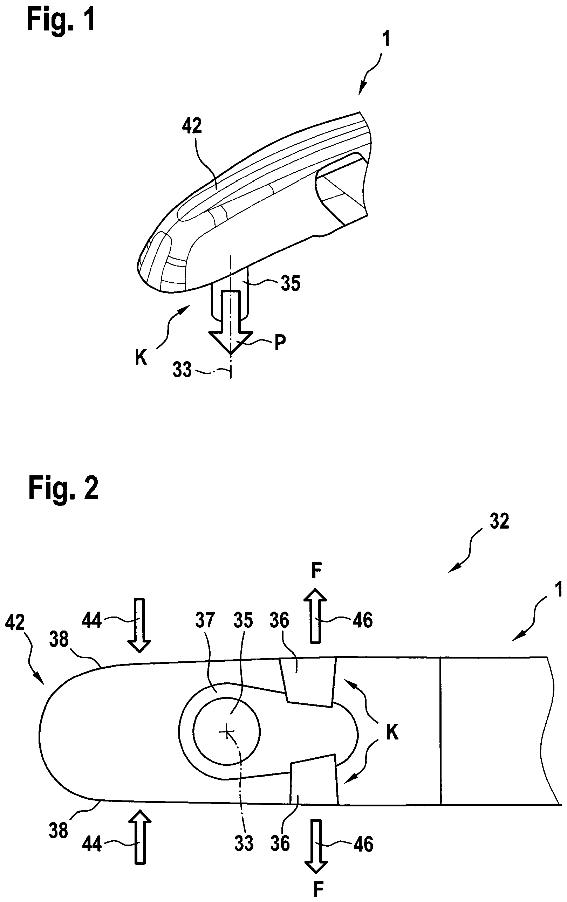

Figur 1 zeigt eine schematische Teil-Darstellung eines Wischarms 1 einer Scheibenwischvorrichtung für ein Fahrzeug, insbesondere für ein Kraftfahrzeug. In der perspektivischen Darstellung der Figur 1 ist ein Wischblattkopf 42 gezeigt, welcher von einer Antriebswelle 35 einer Scheibenwischer-Antriebseinheit des Fahrzeugs abhebbar ist, und der eine Schnellverbindungseinrichtung gemäß Ausführungsformen der Erfindung aufweist. Der Wischkopf 42 des Wischblatts wird in einer durch einen Pfeil P angezeigten Richtung von oben auf die Antriebswelle 35 aufgesetzt und in einer Klemmposition K auf dieser fixiert. Nach der Fixierung in der Klemmposition K kann von der Antriebswelle 35 ein Drehmoment um die Achse 33 der Antriebswelle 35, d.h. um die Antriebsachse 33, auf den Wischblattkopf 42 und auf den gesamten Wischarm 1 übertragen werden.

Figur 2 zeigt eine schematische Darstellung zur Erläuterung des Funktionsprinzips der Schnellverbindungseinrichtung 32 vom Wippen-Typ, gemäß Ausführungsformen der Erfindung. Die Scheibenwischvorrichtung weist die Schnellverbindungseinrichtung 32 aufweist, welche dafür ausgelegt ist, den Wischarm 1 lösbar mit der Antriebswelle 35 der Antriebseinheit des Fahrzeugs zu verbinden.

In Figur 2 ist der Wischblattkopf 42 mit der Schnellverbindungseinrichtung 32 in einer Ansicht von unten dargestellt, d.h. gesehen von der Antriebswelle 35 in Richtung der Antriebsachse 33. Am oberen Ende der Antriebswelle 35, entfernt von der Antriebseinheit der Scheibenwischvorrichtung, ist ein Drehmomentübertragungsteil 37 angebracht, welches dazu dient, das von der Antriebseinheit auf die Antriebswelle 35 aufgebrachte Drehmoment auf den Wischblattkopf 42 zu übertragen, und auch dazu, den Wischblattkopf 42 sicher an der Antriebswelle 35 zu befestigen . Hierbei wird das Drehmomentübertragungsteil 37 zusammen mit dem oberen Ende der Antriebswelle 35 in der Struktur des Wischblattkopfs 42 aufgenommen.

Darüber hinaus weist die Schnellverbindungseinrichtung 32 eine elastische Klemmbacke 38 auf, die beispielsweise aus einem Kunststoffmaterial ausgeführt ist. Die Klemmbacke 38 ist so ausgelegt, dass sie die externe Kraft in einer Krafteinwirkungsrichtung 44, welche ungefähr senkrecht zu einer Antriebsachse 33 der Antriebswelle 35 ausgerichtet ist, elastisch nachgiebig aufnehmen kann. Die Schnellverbindungseinrichtung 32 weist darüber hinaus mindestens ein Eingriffsteil 36 auf, welches dafür ausgelegt ist, in die Antriebswelle 35 und/oder in das an der Antriebswelle 35 angebrachte Drehmomentübertragungsteil 37 einzugreifen, um ein Drehmoment um die Antriebsachse 33 von der Antriebswelle 35 über die Schnellverbindungseinrichtung 32 auf den Wischarm 1 zu übertragen.

Die elastische Klemmbacke 38 kann nun das Eingriffsteil 36 bei einem Anlegen einer externen Kraft von einer Klemmposition K (in Figur 2 gezeigt), in der die Schnellverbindungseinrichtung 32 den Wischarm 1 an die Antriebswelle 35 klemmt, in eine Freigabeposition F (in Figur 2 nicht gezeigt) überführen, in der der Wischarm 1 der Scheibenwischvorrichtung von der Antriebswelle 35 bzw. dem Drehmomentübertragungsteil 37 entfernbar ist. Damit wirkt die in Figur 2 gezeigte Klemmbacke 38 wie eine Wippe, d.h. die Schnellverbindungseinrichtung 32 beruht auf einem Freigabemechanismus nach Art einer Wippe, wobei eine Auslöserichtung 46, in welche das Eingriffsteil 36 zur Erreichung der Freigabeposition F bewegt wird, ungefähr antiparallel zu der Krafteinwirkungsrichtung 44 ausgerichtet ist. D.h., ein Drücken auf die Klemmbacke 38 in Richtung 44 bewirkt eine Auslenkung an der Stelle 46 und damit eine Freigabe des Teils 37 durch die Eingriffsteile 36. In vorteilhafter Weise liegt ein Abstand zwischen einer Achse, in welcher die externe Kraft in der Krafteinwirkungsrichtung 44 auf die Klemmbacke 38 einwirkt, und einer Achse der Auslöserichtung 46 des Eingriffsteils 36 in einem Bereich von 0,5 cm und 7 cm, insbesondere in einem Bereich von 1 cm bis 4 cm, und ferner insbesondere bei ungefähr 2,5 cm.

Gemäß Ausführungsformen, welche mit anderen hierin beschriebenen Ausführungsformen kombiniert werden können, kann die Schnellverbindungseinrichtung 32 ein Material enthalten, welches gewählt ist aus der Gruppe, die besteht aus Gummi, Carbon, POM, PA, TPE, insbesondere TPE-S, TPE-O, TPE-U, TPE-A TPE-V und TPE-E, oder jedweder Kombination davon.

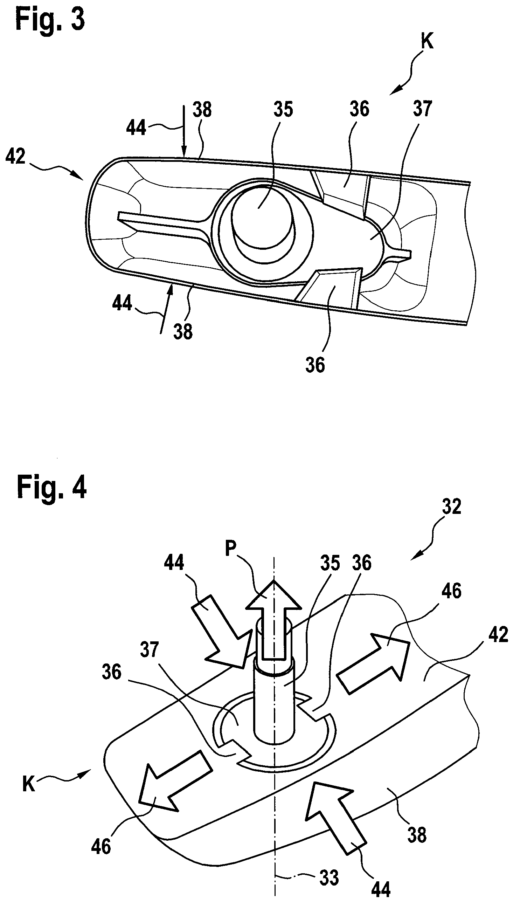

Figur 3 ist eine perspektivische Darstellung der in Figur 2 skizzierten Schnellverbindungseinrichtung vom Wippen-Typ im Detail, gemäß Ausführungsformen der Erfindung. In der in Figur 3 gezeigten Klemmposition K ist die Antriebswelle 35 zusammen mit dem an der Antriebswelle 35 befestigten Drehmomentübertragungsteil 37 in den Wischblattkopf 42 eingebettet. Elastische Strukturen in dem Wischblattkopf 42 formen den Wippenmechanismus mit der Klemmbacke 38. Die beiden Eingriffsteile 36 halten hierbei das Drehmomentübertragungsteil 37 eingebettet in den Wischblattkopf 42, solange keine externe Kraft, z. B. durch Drücken an der Stelle 44 einwirkt.

Figur 4 ist eine perspektivische Darstellung einer weiteren Schnellverbindungseinrichtung vom ovalen Typ, sowie eine schematische Darstellung zur Erläuterung des Funktionsprinzips der weiteren Schnellverbindungseinrichtung, gemäß Ausführungsformen der Erfindung. Das Funktionsprinzip der in Figur 4 dargestellten Schnellverbindungseinrichtung 32 unterscheidet sich von demjenigen unter Bezugnahme auf Figur 3 erläuterten.

Die in Figur 4 gezeigte Schnellverbindungseinrichtung 32 beruht auf einem ovalen Freigabemechanismus dergestalt, dass eine Auslöserichtung 46, in welche ein Eingriffsteil 36 zur Erreichung der Freigabeposition F bewegt wird, ungefähr senkrecht zu der Krafteinwirkungsrichtung 44 ausgerichtet ist. Sowohl die Auslöserichtung 46 als auch die Krafteinwirkungsrichtung 44 sind senkrecht zu der Antriebsachse 33 ausgerichtet. Wird bei der Schnellverbindungseinrichtung 32 mit ovalem Freigabemechanismus eine Kraft in der Kraftwirkungsrichtung 44 aufgebracht, d.h. wird in Richtung der Pfeile 44 auf die Klemmbacke 38 gedrückt, so weicht elastisches Material des Wischblattkopfs 42 in Auslöserichtung 46 aus, d.h. eine ovale Verformung der im kraftlosen Zustand etwa runden Öffnung wird bewirkt. In der Folge geben die seitlich angeordneten Eingriffsteile 36 das Drehmomentübertragungsteil 37 bzw. eine Hinterschneidung in dem Drehmomentübertragungsteil 37 frei und die Antriebswelle 35 kann zusammen mit dem Drehmomentübertragungsteil 37 in Richtung des Pfeils P, entlang der Antriebsachse 33, aus dem Wischblattkopf 42 entfernt werden.

In der Klemmposition K, in der die Schnellverbindungseinrichtung 32 den Wischarm 1 an die Antriebswelle 35 klemmt, umschließt die elastische Klemmbacke 38 zusammen mit dem Wischblattkopf 42 die Antriebswelle (35) und das Drehmomentübertragungsteil 37.

Im Folgenden werden Aspekte einer beispielhafte Scheibenwischvorrichtung beschrieben, für welche die hierin beschriebenen Ausführungsformen der Scheibenwischvorrichtung, insbesondere die hierin beschriebenen Schnellverbindungseinrichtungen besonders vorteilhaft sind.

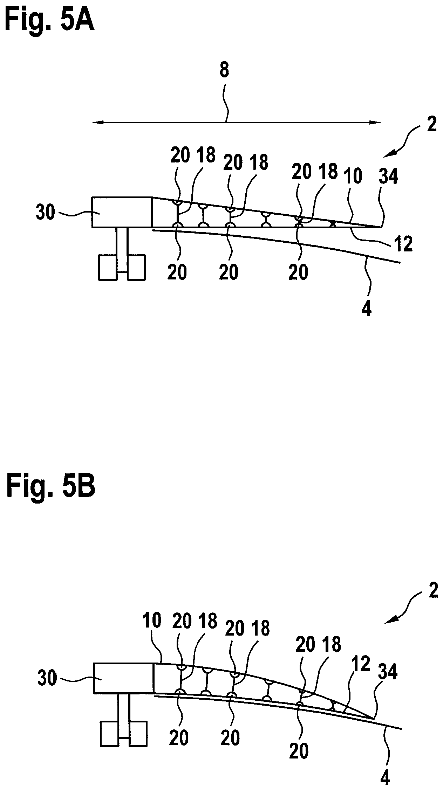

Figuren 5A und 5B zeigen schematische Darstellungen eines Wischblatts 2 in einer Grundstellung und in einer an eine Scheibe angelegten Stellung gemäß Ausführungsformen der Scheibenwischvorrichtung der Offenbarung. Es werden hier Fin-Ray-Wischer beschrieben, für die eine Schnellverbindungseinrichtung 32 gemäß der hier beschriebenen Ausführungsformen besonders nützlich ist. Die Schnellverbindungseinrichtung 32 Figuren 5A, 5B, 6 und 7 nicht erneut dargestellt und kann auch in diesen Ausführungsformen wie zuvor beschrieben zur Verfügung gestellt werden. Das Wischblatt 2 dient zum Wischen einer Scheibe 4 eines Fahrzeugs, das zum Beispiel ein Kraftfahrzeug ist, insbesondere ein Auto. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein Es ist ebenso möglich, nur jeweils einen Teil des Oberteils 10 und/oder des Unterteils 12 biegbar auszugestalten. Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit.

Das Oberteil 10 und das Unterteil 12 sind an dem Befestigungsteil 30 befestigt. Die Scheibenwischvorrichtung kann mittels des Befestigungsteils 30, zum Beispiel mit einer Quickfix-Befestigung bzw. Schnellverbindungseinrichtung am Fahrzeug bzw. mit einer Scheibenwischer-Antriebseinheit des Fahrzeugs verbunden sein. Eine derartige Quickfix-Befestigung kann die Antriebswelle 35 der Scheibenwischvorrichtung mit dem Wischarm 1 schnell lösbar verbinden. An der Seite, die dem Befestigungsteil 30 entlang der Längserstreckung der Scheibenwischvorrichtung gegenüberliegt, ist das Oberteil 10 und das Unterteil 12 an einer Verbindungsposition 34 verbunden. Das Oberteil 10 und das Unterteil 12 sind durch Verbindungselemente 18 miteinander verbunden. Die Verbindungselemente 18 sind derart ausgestaltet, dass sich der Abstand der Verbindungsposition mit dem Oberteil 10 und der Abstand der Verbindungsposition mit dem Unterteil 12 um maximal +/- 1 mm ändert, insbesondere um maximal +/- 0,3 mm ändert (zum Beispiel durch Wärmeausdehnung und/oder Zug und Druckbelastung). Die Verbindungselemente 18 können somit im Wesentlichen nicht elastisch ausgebildet bzw. der Effekt der Verbindungselemente 18 beruht auf deren Kraftübertragung zwischen Oberteil 10 und Unterteil 12 und nicht auf deren Elastizität.

Die Verbindungselemente 18 sind an einander zugewandten inneren Längsseiten des Oberteils 10 und des Unterteils 12 mittels Drehgelenken 20 befestigt. Typischerweise sind die Drehgelenke 20 Scharniere. Insbesondere können die Drehgelenke 20 als Filmscharniere ausgebildet sein. Dies ist vor allem dann vorteilhaft, wenn das Oberteil 10, das Unterteil 12 und/oder die Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Die Verbindungselemente sind an dem Oberteil 10 an einer jeweiligen oberen Verbindungsposition verbunden und an dem Unterteil 12 an einer jeweiligen unteren Verbindungsposition. Zum Beispiel ist an den Verbindungspositionen jeweils ein Drehgelenk zur Verfügung gestellt. Bei einer Bewegung des Oberteils 10 des Unterteil 12 relativ zueinander verändert sich der Abstand einer oberen Verbindungsposition zu einer unteren Verbindungsposition am selben Verbindungselement im Wesentlichen nicht, d.h. der Abstand ist mit Abweichungen von zum Beispiel ±1 mm, insbesondere ±0,3 mm konstant.

Weiter hat das Wischblatt 2 ein Kopfende. Am Kopfende ist ein Befestigungsteil 30, d.h. ein wischblattseitiges Befestigungsteil 30, zur Verfügung gestellt. Entlang der Längserstreckung des Wischblatts 2 wird der Abstand zwischen dem Oberteil 10 und dem Unterteil 12 ausgehend vom Kopfende kleiner, zumindest in Bereichen der Längserstreckung des Wischblatts bzw. in einer überwiegenden Teil der Längserstreckung des Wischblatts. Ausgehend vom Kopfende läuft die Höhe des Wischblatts in Bereichen keilförmig zu bzw. wird in Bereichen der Längserstreckung kleiner. Zum Beispiel kann gemäß Ausführungsformen für eine Mehrzahl der Verbindungselemente die Länge der Verbindungselemente derart zur Verfügung gestellt werden, dass die am Kopfende zur Verfügung gestellten Verbindungselemente länger sind als die an der gegenüberliegenden Seite des Wischblatts entlang der Längserstreckung.

Ausführungsformen, bei denen die Gelenke durch Filmscharniere zur Verfügung gestellt sind, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe PP, PE, POM, und PA, zur Verfügung gestellt werden. Alternativ können die Filmscharniere aus einem oder mehreren Materialen aus einer Gruppe bestehend aus: TPE (Thermoplastischem Elastomer), beispielsweise TPE-S, TPE-O, TPE-U, TPE-A TPE-V und TPE-E hergestellt sein.

Die Verbindungselemente 18 sind entlang der Längserstreckung des Wischblatts 2 voneinander beabstandet. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils, und gute Anpassung an die Krümmung und Krümmungsänderungen der zu wischenden Scheibe gewährleistet werden.

Figur 5B zeigt eine schematische Darstellung des Wischblatts 2 nach Figur 5A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil (durch die Scheibe 4) eine Biegung des Unterteils in die Richtung statt, aus der die Kraft wirkt. Dies ist durch die Verbindung des Oberteils 10 und des Unterteils an der Verbindungsposition 34, die Form, und durch Drehgelenke an der Verbindung zwischen den Verbindungselementen und dem Ober- bzw. Unterteil gegeben. Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet. Dadurch hat eine Scheibenwischvorrichtung gemäß den hierin beschriebenen Ausführungsformen den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

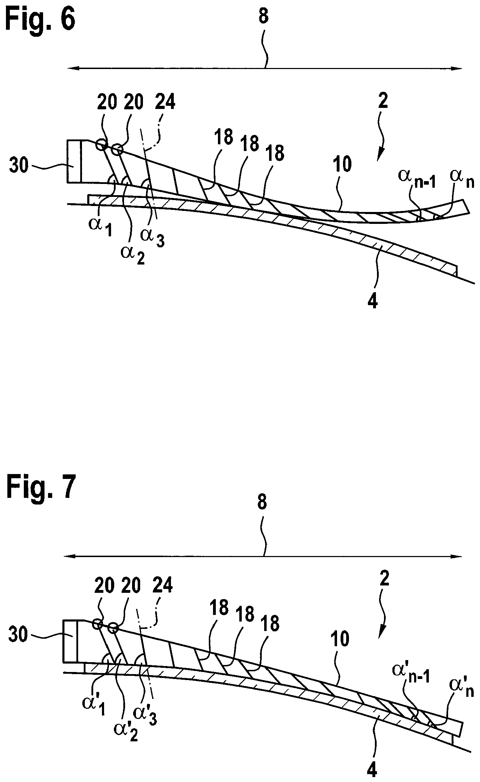

Figuren 6 und 7 zeigen schematische Darstellungen eines Wischblatts 2 einer Scheibenwischvorrichtung für ein Fahrzeug, insbesondere für ein Kraftfahrzeug, in einer Grundstellung (Figur 6), d.h. in einem unbelastetem Zustand, und in einer an eine Scheibe 4 angelegten Stellung (Figur 7) gemäß den hierein beschrieben Ausführungsformen. Das Wischblatt 2 umfasst ein langgestrecktes Oberteil 10 und ein langgestrecktes Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang einer Längserstreckung 8 des Wischblatts 2 voneinander beabstandet sind. Die Verbindungselemente 18 sind ausgelegt, um eine Bewegung des Oberteils 10 und des Unterteils 12 relativ zu einander mit einer Bewegungskomponente entlang einer Längserstreckung 8 des Wischblatts 2 zu ermöglichen. Des Weiteren sind die Verbindungselemente 18 relativ zum Unterteil 12 so angeordnet, dass sich in einem unbelasteten Zustand des Wischblatts 2 ein Winkel αₙ der jeweiligen Längsachsen 24 der Verbindungselemente 18 relativ zum Unterteil 12 zumindest teilweise entlang einer Längserstreckung 8 des Wischblatts 2 verändert, insbesondere stetig verändert bzw. monoton oder streng monoton verändert.

In dem in Figur 6 dargestellten Wischblatt im unbelastetem Zustand sind die Winkel αₙ der jeweiligen Längsachsen der Verbindungselemente 18 relativ zum Unterteil 12, die sich entlang der Längserstreckung 8 des Wischblatts 2 ändern, mit α₁, α₂, α₃, ... αₙ₋₁, αₙ bezeichnet. In einem belasteten Zustand des Wischblatts, d.h. in einer an die Scheibe angelegten Stellung, wie sie beispielhaft in Figur 7 dargestellt ist, verändern sich die Winkel αₙ der jeweiligen Längsachsen 24 der Verbindungselemente 18 relativ zum Unterteil 12 im Vergleich zum unbelasteten Zustand. Um dies zum Ausdruck zu bringen sind die Winkel αₙ der jeweiligen Längsachsen der Verbindungselemente 18 relativ zum Unterteil 12, die sich entlang der Längserstreckung 8 des Wischblatts 2 ändern, in dem in Figur 2 dargestellten Wischblatt, welches sich in einer an die Scheibe angelegten Position befindet, mit α'₁, α'₂, α'₃, ... α'ₙ₋₁, α'ₙ bezeichnet.

Gemäß Ausführungsformen der Scheibenwischvorrichtung, welche mit anderen Ausführungsformen kombiniert werden können, weist das Wischblatt 2 zumindest einen ersten Bereich auf, in dem der Winkel αₙ der Längsachsen 24 der Verbindungselemente 18 relativ zum Unterteil 12 entlang einer Längserstreckung 8 des Wischblatts 2 zu einem Wischblattende hin abnimmt, insbesondere monoton, insbesondere streng monoton, abnimmt. Ferner kann das Wischblatt 2 zumindest einen zweiten Bereich aufweisen, in dem der Winkel αₙ der Längsachsen 24 der Verbindungselemente 18 relativ zum Unterteil 12 entlang einer Längserstreckung 8 des Wischblatts 2 zu einem Wischblattende hin zunimmt, insbesondere monoton, insbesondere streng monoton, zunimmt. Gemäß Ausführungsformen, wie beispielhaft in den Figuren 6 und 7 dargestellt, ist der zweite Bereich des Wischblatts, in dem der Winkel αₙ der Längsachsen 24 der Verbindungselemente 18 relativ zum Unterteil 12 entlang der Längserstreckung 8 des Wischblatts 2 zu einem Wischblattende hin zunimmt, an einer inneren Position des Wischblatts angeordnet, welche sich in der Nähe des Befestigungsteils 30 des Wischblatts 2 befindet. Dadurch kann eine Scheibenwischvorrichtung zur Verfügung gestellt werden, welche eine besonders gute Anpassung an die Krümmung einer Scheibe ermöglicht. Ferner kann ein weitgehend gleichmäßiger Anpressdruck der Scheibenwischvorrichtung auf der Scheibe als auch eine homogene Kraftverteilung der Scheibenwischvorrichtung bereitgestellt werden, so dass eine hohe Wischqualität bereitgestellt wird.

Gemäß Ausführungsformen des Wischblatts, welche mit anderen Ausführungsformen kombiniert werden können, sind die Verbindungselemente 18, insbesondere in einem unbelastetem Zustand des Wischblatts 2, so an dem Unterteil 12 befestigt, dass die Längsachsen 24 der Verbindungselemente 18 in Winkeln αₙ zum Unterteil 12 verlaufen, die zwischen einem unteren Winkelgrenzwert αₙᵤ und einem oberen Grenzwert αₙₒ liegen. Gemäß Ausführungsformen, ist der untere Winkelgrenzwert αₙᵤ = 10°, insbesondere αₙᵤ = 15°, insbesondere αₙᵤ = 20° und der obere Winkelgrenzwert αₙₒ = 80°, insbesondere αₙₒ = 90° insbesondere αₙₒ = 100°. Dies gewährleistet vorteilhafterweise eine besonders gute Übertragung einer auf das Unterteil wirkenden Kraft auf das Oberteil.

Gemäß Ausführungsformen der Scheibenwischvorrichtung, welche mit anderen Ausführungsformen kombiniert werden können, sind die Verbindungselemente 18 derart konfiguriert sind, dass sich der Abstand zwischen dem Oberteil 10 und dem Unterteil 12 zumindest teilweise entlang einer Längserstreckung 8 des Wischblatts 2 verändert, insbesondere in einem ersten Bereich stetig verkleinert und in einem zweiten Bereich stetig vergrößert. Der Abstand zwischen dem Oberteil 10 und dem Unterteil 12 entlang der Längserstreckung 8 des Wischblatts 2 kann auch einen Bereich umfassen, in welchem der Abstand zwischen dem Oberteil 10 und dem Unterteil 12 entlang der Längserstreckung 8 des Wischblatts 2 im Wesentlichen konstant ist. Der Abstand zwischen dem Oberteil 10 und dem Unterteil 12 ist am Befestigungsteil 30 größer als am gegenüberliegenden Ende, an welchem sich die Verbindungsposition 34 befindet.

Gemäß Ausführungsformen des Wischblatts, welche mit anderen Ausführungsformen kombiniert werden können, beträgt der innere (dem Befestigungsteil zugewandte) Abstandswert mindestens 15 mm, insbesondere mindestens 25 mm, insbesondere mindestens 35 mm. Gemäß Ausführungsformen, welche mit anderen Ausführungsformen kombiniert werden können, beträgt der äußere Abstandswert mindestens 10 mm, insbesondere mindestens 12,5 mm, insbesondere mindestens 15 mm. Gemäß Ausführungsformen, welche mit anderen Ausführungsformen kombiniert werden können, beträgt der mittlere Abstandswert mindestens 7,5 mm, insbesondere mindestens 9 mm, insbesondere mindestens 12,5 mm.

Wie in den Figuren 6 bis 7 beispielhaft dargestellt, sind die Verbindungselemente 18 gemäß Ausführungsformen, welche mit anderen Ausführungsformen kombiniert werden können, gelenkig mit dem Unterteil 12 und/oder dem Oberteil 10 verbunden. Insbesondere sind die Verbindungselemente 18 mit dem Unterteil 12 und/oder dem Oberteil 10 mittels eines ersten Filmscharniers 20 verbunden. Das erste Filmscharnier 20 kann einteilig mit dem Verbindungselement 18 und dem Oberteil 10 und/oder dem Unterteil 12 ausgebildet sein. Die einteilige Ausgestaltung der Filmscharniere erlaubt eine einfache und kostengünstige Herstellung.

Gemäß Ausführungsformen des Wischblatts, welche mit anderen hierin beschriebenen Ausführungsformen kombiniert werden können, umfasst das Wischblatt einen ersten Bereich mit einer ersten Krümmung ω<0 und einen zweiten Bereich mit einer zweiten Krümmung ω>0. Ferner kann das Wischblatt gemäß Ausführungsformen einen dritten Bereich mit einer dritten Krümmung ω<0 aufweisen, wobei der zweite Bereich des Wischblatts mit der zweiten Krümmung ω>0 zwischen dem ersten Bereich mit der ersten Krümmung ω<0 und dem dritten Bereich mit der dritten Krümmung ω<0 angeordnet ist, wie es beispielhaft in Figur 6 gezeigt ist. Somit kann eine Scheibenwischvorrichtung zur Verfügung gestellt werden mit welcher ein weitgehend gleichmäßiger Anpressdruck auf die Scheibe 4 realisiert werden kann. Ferner kann eine Scheibenwischvorrichtung bereitgestellt werden, welche eine verbesserte Anpassung an die Scheibe 4 und eine hohe Wischqualität aufweist.

Gemäß weiteren Ausführungsformen kann zusätzlich zu einem für Fin-Ray-Wischer verwendbaren Quickfix-Befestigungsverschluss, bei dem die gesamte Scheibenwischvorrichtung von einer Antriebsachse am Fahrzeug entfernt wird, ein Mechanismus zur Verfügung gestellt werden, um das Wischblatt 2 einer Scheibenwischvorrichtung von der Scheibe 4 abzuheben bzw. auf diese aufzusetzen. Dies vereinfacht weiter die Benutzung, zum Beispiel für eine manuelle Reinigung der Scheibe 2.

## Patentansprüche

1. Scheibenwischvorrichtung für ein Fahrzeug, insbesondere ein Kraftfahrzeug, umfassend einen Wischarm (1) mit einem Wischblatt (2), welches umfasst:
- ein langgestrecktes Oberteil (10), das zumindest teilweise biegbar ausgestaltet ist,
- ein langgestrecktes Unterteil (12), das zumindest teilweise biegbar ausgestaltet ist, und
- mehrere Verbindungselemente (18) zum Verbinden des Oberteils (10) und des Unterteils (12), wobei die Verbindungselemente (18) entlang einer Längserstreckung (8) des Wischblatts (2) voneinander beabstandet, wobei die Verbindungselemente (18) ausgelegt sind, um eine Bewegung des Oberteils (10) und des Unterteils (12) relativ zueinander mit einer Bewegungskomponente entlang einer Längserstreckung (8) des Wischblatts (2) zu ermöglichen, **dadurch gekennzeichnet dass** die Scheibenwischvorrichtung ferner eine Schnellverbindungseinrichtung (32) aufweist, welche dafür ausgelegt ist, den Wischarm (1) lösbar mit einer Antriebswelle (35) einer Antriebseinheit des Fahrzeugs zu verbinden, wobei die Schnellverbindungseinrichtung (32) umfasst:
- ein Eingriffsteil (36), welches dafür ausgelegt ist, in die Antriebswelle (35) und/oder in ein an der Antriebswelle (35) angebrachtes Drehmomentübertragungsteil (37) einzugreifen, um ein Drehmoment von der Antriebswelle (35) über die Schnellverbindungseinrichtung (32) auf den Wischarm (1) zu übertragen, und
- eine elastische Klemmbacke (38), welche dafür ausgelegt ist, das Eingriffsteil (36) bei einem Anlegen einer externen Kraft von einer Klemmposition (K), in der die Schnellverbindungseinrichtung (32) den Wischarm (1) an die Antriebswelle (35) klemmt, in eine Freigabeposition (F), in der der Wischarm (1) von der Antriebswelle (35) entfernbar ist, zu überführen, wobei die elastische Klemmbacke (38) mit einem Wischblattkopf (42) der Scheibenwischvorrichtung integral ausgebildet ist.

2. Scheibenwischvorrichtung nach Anspruch 1, wobei die Schnellverbindungseinrichtung (32) ein Befestigungsteil (30) umfasst, welches dafür ausgelegt ist, das Oberteil (10) und das Unterteil (12) des Wischblatts (2) mit der Schnellverbindungseinrichtung (32) zu verbinden.

3. Scheibenwischvorrichtung nach einem der Ansprüche 1 bis 2, wobei die Schnellverbindungseinrichtung (32) ein Material enthält, welches gewählt ist aus der Gruppe, die besteht aus Gummi, Carbon, POM, PA, TPE, insbesondere TPE-S, TPE-O, TPE-U, TPE-A TPE-V und TPE-E, oder jedweder Kombination davon.

4. Scheibenwischvorrichtung nach einem der Ansprüche 1 bis 3, wobei die elastische Klemmbacke (38) ausgelegt ist, in der Klemmposition (K), in der die Schnellverbindungseinrichtung (32) den Wischarm (1) an die Antriebswelle (35) klemmt, die Antriebswelle (35) und das Drehmomentübertragungsteil (37) zu umschliessen.

5. Scheibenwischvorrichtung nach einem der Ansprüche 1 bis 4, wobei die elastische Klemmbacke (38) aus einem Kunststoffmaterial ausgeführt ist.

6. Scheibenwischvorrichtung nach einem der Ansprüche 1 bis 5, wobei die Klemmbacke (38) ausgelegt ist, die externe Kraft in einer Krafteinwirkungsrichtung (44), welche ungefähr senkrecht zu einer Antriebsachse (33) der Antriebswelle (35) ausgerichtet ist, elastisch nachgiebig aufzunehmen.

7. Scheibenwischvorrichtung nach Anspruch 6, wobei die Schnellverbindungseinrichtung (32) einen ovalen Freigabemechanismus umfasst, bei dem eine Auslöserichtung (46), in welche das Eingriffsteil (36) zur Erreichung der Freigabeposition (F) bewegt wird, ungefähr senkrecht zu der Krafteinwirkungsrichtung (44) ausgerichtet ist.

8. Scheibenwischvorrichtung nach Anspruch 6, wobei die Schnellverbindungseinrichtung (32) einen Freigabemechanismus nach Art einer Wippe umfasst, bei dem eine Auslöserichtung (46), in welche das Eingriffsteil (36) zur Erreichung der Freigabeposition (F) bewegt wird, ungefähr antiparallel zu der Krafteinwirkungsrichtung (44) ausgerichtet ist.

9. Scheibenwischvorrichtung nach Anspruch 9, wobei ein Abstand zwischen einer Achse, in welcher die externe Kraft in der Krafteinwirkungsrichtung (44) auf die Klemmbacke (38) einwirkt, und einer Achse der Auslöserichtung (46) des Eingriffsteils (36) in einem Bereich von 0,5 cm und 7 cm, insbesondere in einem Bereich von 1 cm bis 4 cm, und ferner insbesondere bei ungefähr 2,5 cm liegt.

10. Scheibenwischvorrichtung nach einem der Ansprüche 1 bis 9, wobei die mehreren Verbindungselemente an mehreren oberen Verbindungspositionen mit dem Oberteil und an mehreren unteren korrespondierenden Verbindungspositionen mit dem Unterteil verbunden sind, und wobei bei der Bewegung des Oberteils und des Unterteils relativ zueinander der Abstand zwischen einer oberen Verbindungspositionen und einer korrespondierenden unteren Verbindungsposition, im Wesentlichen konstant ist, insbesondere konstant ist mit einer Abweichung von ±1 mm.

11. Scheibenwischvorrichtung nach einem der Ansprüche 1 bis 10, wobei die Verbindungselemente (18) an dem Oberteil (10) und/oder dem Unterteil (12) mittels eines Drehgelenks angebracht sind.

## Claims

1. Windshield wiper device for a vehicle, in particular a motor vehicle, comprising a wiper arm (1) with a wiper blade (2) which comprises:
- an elongate upper part (10), which is configured to be at least partially bendable,
- an elongate lower part (12), which is configured to be at least partially bendable, and
- a plurality of connecting elements (18) for connecting the upper part (10) and the lower part (12), wherein the connecting elements (18) are spaced apart from one another along a longitudinal extent (8) of the wiper blade (2), wherein the connecting elements (18) are designed in order to permit a movement of the upper part (10) and the lower part (12) relative to each other with a movement component along a longitudinal extent (8) of the wiper blade (2),
**characterized in that** the windshield wiper device furthermore has a quick connecting device (32) which is designed in order to connect the wiper arm (1) releasably to a drive shaft (35) of a drive unit of the vehicle, wherein the quick connecting device (32) comprises:
- an engagement part (36) which is designed in order to engage in the drive shaft (35) and/or in a torque transmission part (37) attached to the drive shaft (35), in order to transmit a torque from the drive shaft (35) to the wiper arm (1) via the quick connecting device (32), and
- an elastic clamping jaw (38) which is designed in order to transfer the engagement part (36), when an external force is applied, from a clamping position (K), in which the quick connecting device (32) clamps the wiper arm (1) to the drive shaft (35), into a release position (F), in which the wiper arm (1) is removable from the drive shaft (35), wherein the elastic clamping jaw (38) is formed integrally with a wiper blade head (42) of the windshield wiper device.

2. Windshield wiper device according to Claim 1, wherein the quick connecting device (32) comprises a fastening part (30) which is designed in order to connect the upper part (10) and the lower part (12) of the wiper blade (2) to the quick connecting device (32).

3. Windshield wiper device according to either of Claims 1 and 2, wherein the quick connecting device (32) contains a material which is selected from the group which consists of rubber, carbon, POM, PA, TPE, in particular TPE-S, TPE-O, TPE-U, TPE-A, TPE-V and TPE-E, or any combination thereof.

4. Windshield wiper device according to one of Claims 1 to 3, wherein the elastic clamping jaw (38) is designed in order to surround the drive shaft (35) and the torque transmission part (37) in the clamping position (K) in which the quick connecting device (32) clamps the wiper arm (1) to the drive shaft (35).

5. Windshield wiper device according to one of Claims 1 to 4, wherein the elastic clamping jaw (38) is formed from a plastics material.

6. Windshield wiper device according to one of Claims 1 to 5, wherein the clamping jaw (38) is designed in order to absorb the external force in an elastically flexible manner in a direction of action of force (44) which is oriented approximately perpendicular to a drive axis (33) of the drive shaft (35).

7. Windshield wiper device according to Claim 6, wherein the quick connecting device (32) comprises an oval release mechanism in which a triggering direction (46) in which the engagement part (36) is moved in order to reach the release position (F) is oriented approximately perpendicular to the direction of action of force (44).

8. Windshield wiper device according to Claim 6, wherein the quick connecting device (32) comprises a release mechanism in the manner of a rocker, in which a triggering direction (46) in which the engagement part (36) is moved in order to reach the release position (F) is oriented approximately antiparallel to the direction of action of force (44) .

9. Windshield wiper device according to Claim 9, wherein a distance between an axis in which the external force acts on the clamping jaw (38) in the direction of action of force (44) and an axis of the triggering direction (46) of the engagement part (36) lies within a range of 0.5 cm and 7 cm, in particular within a range of 1 cm to 4 cm, and furthermore in particular at approximately 2.5 cm.

10. Windshield wiper device according to one of Claims 1 to 9, wherein the plurality of connecting elements are connected to the upper part at a plurality of upper connecting positions and are connected to the lower part at a plurality of lower corresponding connecting positions, and wherein, during the movement of the upper part and the lower part relative to each other, the distance between an upper connecting position and a corresponding lower connecting position is substantially constant, in particular is constant with a deviation of ± 1 mm.

11. Windshield wiper device according to one of Claims 1 to 10, wherein the connecting elements (18) are attached to the upper part (10) and/or to the lower part (12) by means of a rotary joint.

## Revendications

1. Dispositif d'essuie-glace pour un véhicule, en particulier un véhicule automobile, comprenant un bras d'essuie-glace (1) avec un balai d'essuie-glace (2), qui comprend :
- une partie supérieure allongée (10), qui est configurée de manière au moins en partie flexible,
- une partie inférieure allongée (12), qui est configurée de manière en partie flexible, et
- plusieurs éléments de connexion (18) pour la connexion de la partie supérieure (10) et de la partie inférieure (12), les éléments de connexion (18) étant espacés les uns des autres le long d'une étendue longitudinale (8) du balai d'essuie-glace (2), les éléments de connexion (18) étant conçus pour permettre un mouvement de la partie supérieure (10) et de la partie inférieure (12) l'un par rapport à l'autre avec une composante de mouvement le long d'une étendue longitudinale (8) du balai d'essuie-glace (2),
**caractérisé en ce que**
le dispositif d'essuie-glace présente en outre un dispositif de raccord rapide (32) qui est conçu pour raccorder le bras d'essuie-glace (1) de manière amovible à un arbre d'entraînement (35) d'une unité d'entraînement du véhicule, le dispositif de raccord rapide (32) comprenant :
- une partie d'engagement (36) qui est conçue pour venir en prise dans l'arbre d'entraînement (35) et/ou dans une partie de transfert de couple (37) montée sur l'arbre d'entraînement (35), afin de transférer un couple de l'arbre d'entraînement (35) par le biais du dispositif de raccord rapide (32) au bras d'essuie-glace (1), et
- une mâchoire de serrage élastique (38) qui est conçue pour transférer la partie d'engagement (36), lors de l'application d'une force externe, d'une position de serrage (K) dans laquelle le dispositif de raccord rapide (32) serre le bras d'essuie-glace (1) contre l'arbre d'entraînement (35), dans une position de libération (F) dans laquelle le bras d'essuie-glace (1) peut être enlevé de l'arbre d'entraînement (35), la mâchoire de serrage élastique (38) étant réalisée intégralement avec une tête de balai d'essuie-glace (42) du dispositif d'essuie-glace.

2. Dispositif d'essuie-glace selon la revendication 1, dans lequel le dispositif de raccord rapide (32) comprend une partie de fixation (30) qui est conçue pour relier la partie supérieure (10) et la partie inférieure (12) du balai d'essuie-glace (2) au dispositif de raccord rapide (32).

3. Dispositif d'essuie-glace selon l'une quelconque des revendications 1 à 2, dans lequel le dispositif de raccord rapide (32) contient un matériau choisi parmi le groupe constitué de caoutchouc, carbone, POM, PA, TPE, en particulier TPE-S, TPE-O, TPE-U, TPE-A, TPE-V et TPE-E, ou toute combinaison quelconque de ceux-ci.

4. Dispositif d'essuie-glace selon l'une quelconque des revendications 1 à 3, dans lequel la mâchoire de serrage élastique (38) est conçue pour entourer l'arbre d'entraînement (35) et la partie de transfert de couple (37) dans la position de serrage (K) dans laquelle le dispositif de raccord rapide (32) serre le bras d'essuie-glace (1) contre l'arbre d'entraînement (35).

5. Dispositif d'essuie-glace selon l'une quelconque des revendications 1 à 4, dans lequel la mâchoire de serrage élastique (38) est réalisée à partir d'un matériau en plastique.

6. Dispositif d'essuie-glace selon l'une quelconque des revendications 1 à 5, dans lequel la mâchoire de serrage (38) est conçue pour recevoir de manière élastiquement flexible la force externe dans une direction d'action de force (44) qui est orientée approximativement perpendiculairement à un axe d'entraînement (33) de l'arbre d'entraînement (35).

7. Dispositif d'essuie-glace selon la revendication 6, dans lequel le dispositif de raccord rapide (32) comprend un mécanisme de libération ovale, dans lequel une direction de déclenchement (46) dans laquelle la partie d'engagement (36) est déplacée pour atteindre la position de libération (F), est orientée approximativement perpendiculairement à la direction d'action de force (44).

8. Dispositif d'essuie-glace selon la revendication 6, dans lequel le dispositif de raccord rapide (32) comprend un mécanisme de libération de type bascule, dans lequel une direction de déclenchement (46), dans laquelle la partie d'engagement (36) est déplacée pour atteindre la position de libération (F), est orientée approximativement antiparallèlement à la direction d'action de force (44).

9. Dispositif d'essuie-glace selon la revendication 9, dans lequel une distance entre un axe dans lequel la force externe agit dans la direction d'action de force (44) sur la mâchoire de serrage (38), et un axe de la direction de déclenchement (46) de la partie d'engagement (36) est comprise dans une plage de 0,5 cm à 7 cm, en particulier dans une plage de 1 cm à 4 cm, et en particulier est en outre d'environ 2,5 cm.

10. Dispositif d'essuie-glace selon l'une quelconque des revendications 1 à 9, dans lequel la pluralité d'éléments de connexion sont connectés à la partie supérieure dans plusieurs positions de connexion supérieures et sont connectés à la partie inférieure dans plusieurs positions de connexion correspondantes inférieures, et dans lequel lors du mouvement de la partie supérieure et de la partie inférieure l'une par rapport à l'autre, la distance entre une position de connexion supérieure et une position de connexion inférieure correspondante, est essentiellement constante, en particulier est constante, avec un écart de ± 1 mm.

11. Dispositif d'essuie-glace selon l'une quelconque des revendications 1 à 10, dans lequel les éléments de connexion (18) sont montés sur la partie supérieure (10) et/ou la partie inférieure (12) au moyen d'une articulation pivotante.
